## Europäisches Patentamt
## European Patent Office
## Office européen des brevets

(11) Veröffentlichungsnummer: **0 109 448**
**B1**

(12) **EUROPÄISCHE PATENTSCHRIFT**

(45) Veröffentlichungstag der Patentschrift:
27.04.88

(51) Int. Cl.⁴: **B 64 C 31/02**, B 64 D 17/00

(21) Anmeldenummer: **82105648.8**

(22) Anmeldetag: **03.06.82**

(54) Gleitfluggerät mit variabler Gleitzahl.

(43) Veröffentlichungstag der Anmeldung:
30.05.84 Patentblatt 84/22

(45) Bekanntmachung des Hinweises auf die Patenterteilung:
27.04.88 Patentblatt 88/17

(84) Benannte Vertragsstaaten:
AT BE CH DE FR GB IT LI NL SE

(56) Entgegenhaltungen:
BE-A-671 479
BE-A-706 674
FR-A-1 383 036
FR-A-1 570 286
FR-A-2 376 792

(73) Patentinhaber: **Kief, Horst, Dr. med., Londoner Ring 105, D-6700 Ludwigshafen (DE)**

(72) Erfinder: **Kief, Horst, Dr. med., Londoner Ring 105, D-6700 Ludwigshafen (DE)**

(74) Vertreter: **Fischer, Wolf- Dieter, Dipl.- Ing., Kurfürstenstrasse 32, D-6700 Ludwigshafen/Rhein (DE)**

LIBER, STOCKHOLM 1988

## Beschreibung

Die Erfindung bezieht sich auf ein Gleitfluggerät nach dem Oberbegriff des Anspruchs 1.

Zunächst sei darauf hingewiesen, daß unter einem Schlitzflügel ein aus zwei Flügelelementen bestehender Tragflügel mit zwischen den Flügelelementen angeordnetem Schlitz zu verstehen ist, wobei durch letzteren die Strömung hindurchtreten kann (Schlichting/Truckenbrodt: "Aerodynamik des Flugzeuges", 1 Band, Springer Verlag 1959, Seiten 262/3). Bei einem Vielfachschlitzflügel ist dann eine Vielzahl von in Strömungsrichtung hintereinander angeordneten Schlitzen vorgesehen.

Allgemein unterscheidet man bei Gleitfluggeräten, die in aller Regel aus Segeltuch bestehen sowie leicht und zusammenlegbar ausgebildet sind, die Rundkappe und/oder den Flächengleiter und außerdem den Hängegleiter, der auch als Drachensegler bezeichnet wird, während die ersteren auch als Fallschirm bezeichnet werden. Bei diesen weist die Rundkappe eine gewisse Steuerbarkeit auf durch Öffnungen und/oder Klappen, die auch den Auftrieb in engen Grenzen verbessern. Der Flächen- oder Hängegleiter bietet demgegenüber schon erhebliche Fortschritte. Er ist mehrkammerig aufgebaut und wird durch den Staudruck der von vorn anströmenden Luft in Form gehalten, die als auftriebsgünstiges Profil gestaltet ist. Die Heckflächenteile des Hängegleiters können ein- oder beidseitig über Leinen nach unten gezogen werden, womit ein Steuer- oder Bremsvorgang ausgelöst wird. Jedoch hat dieses Gerät den Nachteil, daß es beim Abbremsen durch Überziehen (stall-Effekt) zu einem plötzlichen Abriß der Strömung und dadurch zu gefährlichen Stürzen kommen kann.

Es ist nun nach der FR-A-15 70 286 bei einem Gleitfluggerät nach dem Oberbegriff des Patentanspruchs 1 bekannt, die Profile aus Gewebebändern o.ä. auszubilden und diese dann quer zur Hauptflugrichtung zu einer Tragfläche zusammenzusetzen. Die so aneinandergrenzenden Streifenprofile sind gemeinsam am Rand der Tragfläche derart fixiert, daß Öffnungen gebildet werden, die sich wenigstens über einen Teil der Tragflächenkuppel erstrecken oder auch wenigstens zwischen diskreten aneinandergrenzenden Streifen. Da diese Profilstreifen sich gegen den Rand der Tragfläche zu mehr übereinanderlegen müssen, ist das größtmögliche Volumen für den Luftdurchsatz durch die Öffnungen im Mittelbereich der Tragfläche anzutreffen.

An die einzelnen Streifenprofile sind Steuerleinen angelenkt, mit denen sich durch Herunterziehen ihrer Heckanteile die insoweit zunächst geschlossenen Öffnungen öffnen lassen. Dadurch entsteht im jeweiligen Heckbereich der Streifenprofile eine mehr oder minder große Öffnung, durch welche die zunächst laminare, oberhalb des vorhergehenden Profils fließenden Strömung zumindest teilweise in den unteren Bereich des Folge-Streifenprofils abgeleitet wird. Es entstehen zwangsläufig nicht nur Turbulenzen sondern unerwünschte abrupte Strömungsabrisse, die zu tödlichen Abstürzen führen mußten und auch geführt haben. Deswegen mußte das so ausgebildete Gleitfluggerät vom Markt genommen werden.

Der gedanklich richtige Ansatz, variable Öffnungen vorzusehen, wurde bei diesem bekannten Stand der Technik jedoch in seiner Ausbildung nicht richtig gelöst.

Hier nun setzt die Erfindung an:

Es soll durch ihre Anwendung eine praktikable und ungefährlichere, bessere Lösung geschaffen werden, nämlich ein sicheres Gleitfluggerät, daß - sowohl als Hängegleiter wie auch als Flächengleiter - eine wesentlich verbesserte Gleitzahl aufweist, nicht zu unkontrollierbaren Strömungsabrissen neigt, also auch einen verminderten "stall"-Effekt und damit eine verbesserte Steuerbarkeit selbst im Grenzbereich besitzt.

Durch die im Anspruch 1 gekennzeichnete Erfindung wird die genannte Aufgabe gelöst. In den weiteren Ansprüchen werden Weiterbildungen der Erfindung angegeben.

Im einzelnen:

Bei einer Ausbildung allein schon nach der Lehre des tragenden Anspruchs 1 wird ein erhöhter Luftdurchsatz auf die Tragflächenoberseite bewirkt. Gleichzeitig kann die Steuerung des Gleitfluggerätes in einfacher und sicherer Weise mittels der definierten Betätigungsleine erfolgen.

Zur weiteren Verbesserung können Segmente vorgesehen werden, die die Profile fest miteinander verbinden und der Stabilisierung des gesamten Gerätes dienen. Es entsteht so ein gleichsam variabler Vielfach-Vor- oder Schlitzflügel ("slot"). Eine kontrollierbare Strömungsführung ist die Folge.

Die Steuerung der einzelnen Profile erfolgt über ein System von Steuerleinen, die vom Springer über die einzige Betätigungsleine, dieses gfls pro Hand gerechnet, beaufschlagt werden kann.

Dabei können in einer ersten Steuerphase zur Vortriebserhöhung die Frontteile der der Steuerung dienenden Profile betätigt werden, wodurch Öffnungen in Form von Flügelschlitzen zum Luftdurchsatz gebildet werden.

In einer zweiten Phase können dann die Heckteile der Heckprofile betätigt werden, d.h. sie werden etwas nach unten gezogen, wodurch ein Bremsvorgang bewirkt wird, und zwar unter Beibehaltung der Öffnungen im Bereich der Frontteile. Dieses gewährleistet neben dem Bremsvorgang zusätzliche Sicherheitsreserven durch erhöhten Auftrieb.

In einer dritten Phase werden dann die in der ersten Phase geöffneten Flügelschlitze geschlossen; es wird dadurch bei dann voll gezogenen Bremsen ein kontrollierter Strömungsabriß erzielt wie er zum Landen erforderlich ist.

Die Erfindung sowie Weiterbildungen derselben werden nun nachfolgend in Zusammenhang mit den in der Zeichnung dargestellten Ausführungsbeispielen beschrieben.

Es stellen dar:

Fig. 1 einen Schnitt gem. der Linie AA durch das in der Fig. 3 dargestellte Gleitfluggerät,

Fig. 2 eine Teilansicht "x" der Fig. 1, jedoch mit geschlossenen Profilen,

Fig. 3 ein als Fallschirm ausgebildetes Gleitfluggerät von vorn mit geöffneten Profilen,

Fig. 4 die Profilfolge in Aufsicht, jedoch nur einen Teil davon,

Fig. 5 einen Schnitt gem. der Linie A-A durch das in der Fig. 6 dargestellte Gleitfluggerät,

Fig. 6 ein als Hängegleiter ausgebildetes Gleitfluggerät von vorn mit geöffneten Profilen,

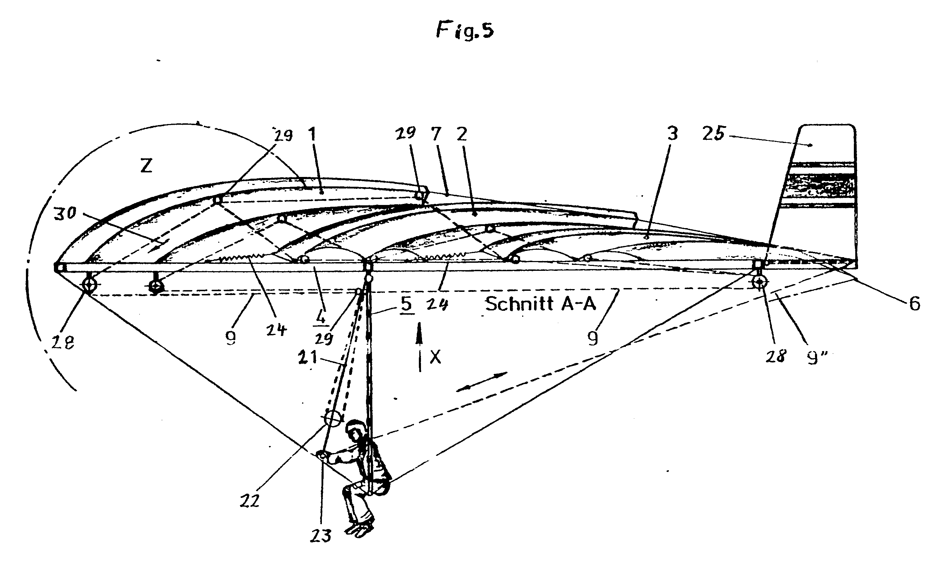

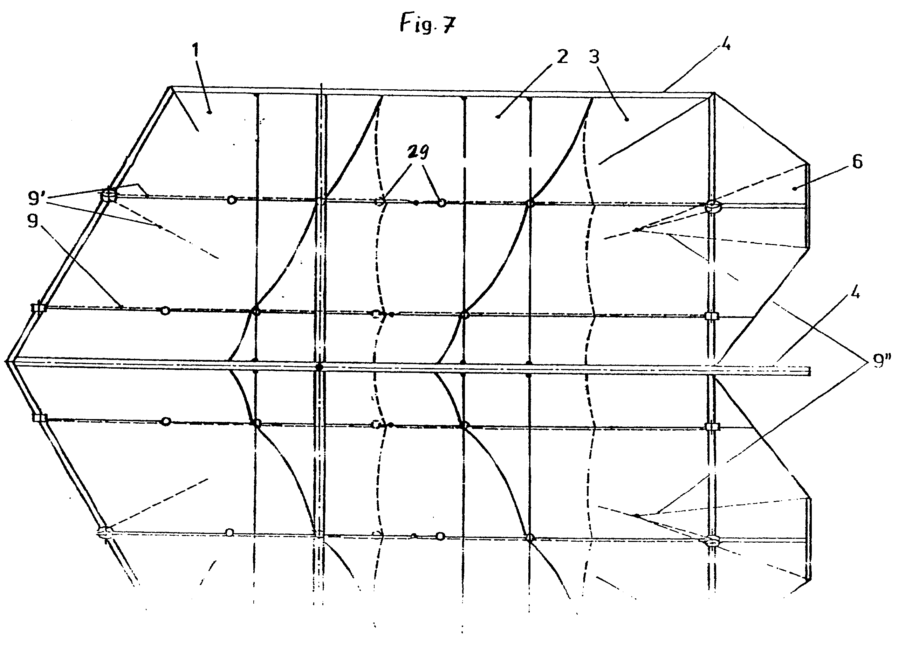

Fig. 7 eine Untersicht unter den Hängegeleiter gem. Fig.6,

Fig. 8 eine Teilansicht "z" der Fig. 5, mit geschlossenem Profil.

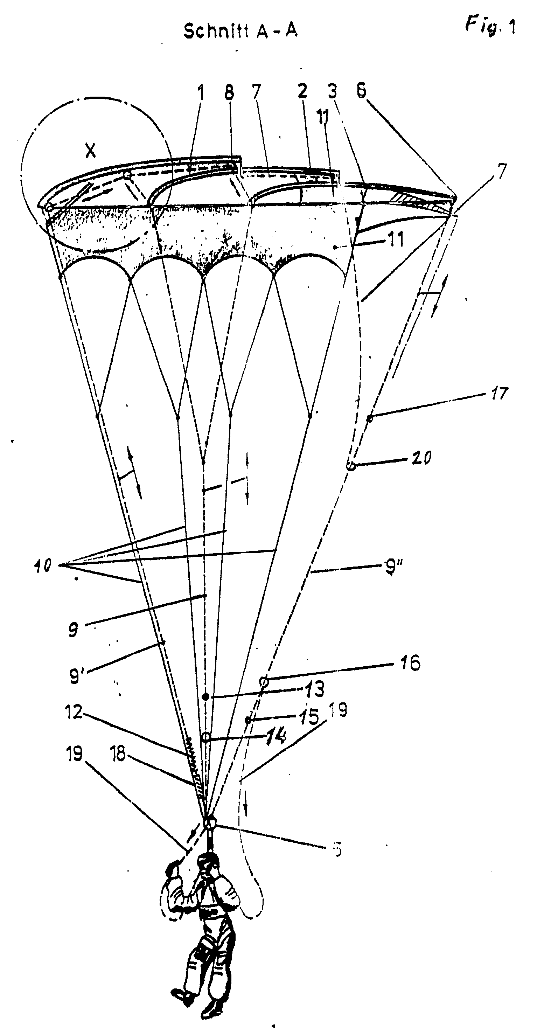

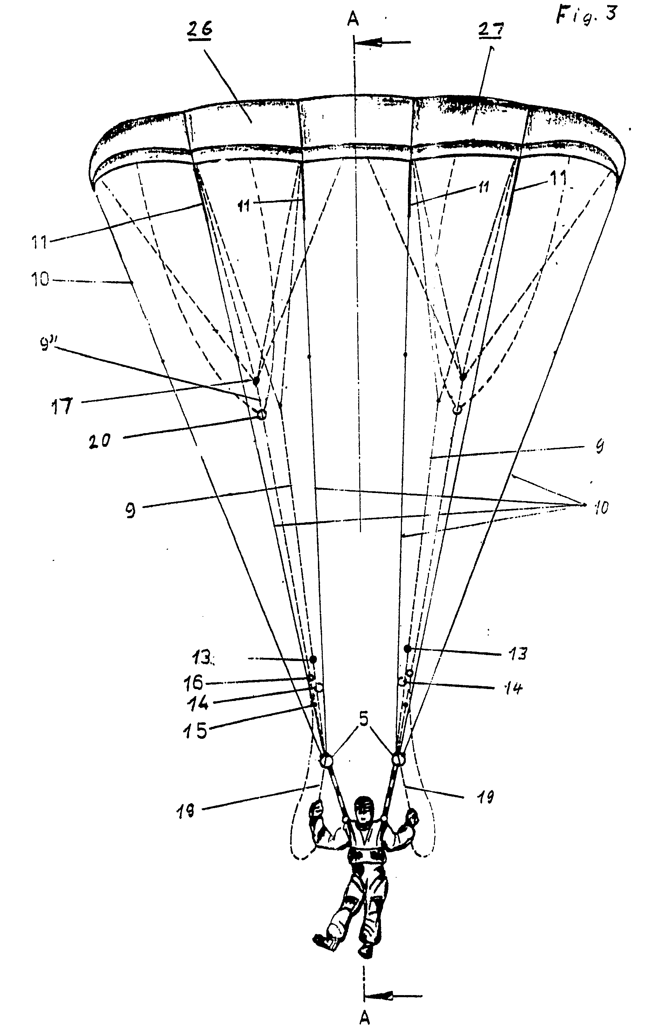

Zunächst sei auf das Gleitfluggerät gem. Fig. 1 bis 6 eingegangen:

Der Springer hängt in einem Hängegurtsystem 5 (in Fig. 1 nur hälftig dargestellt) unter dem Gleitfluggerät. Dieses besteht einerseits aus zwei spiegelbildlich zueinander angeordneten, gleichartig ausgebildeten, fest miteinander verbundenen und im Flug beiderseits über dem Springer angeordneten Hälften 26, 27. Diese werden z. B. durch die entsprechenden Extremitäten des Springers, etwa seine Hände, über eine Leinensystem in ihrer Konfiguration variiert. Dabei ist das Gleitfluggerät anstatt aus einem einzigen tragenden Profil aus einer beliebigen Anzahl einzelner, durchgehender Profile 1, 2, 3 gebildet, die nach dem Prinzip eines Vorflügels einander zugeordnet und durch Segmente 11 fest miteinander verbunden sind, wodurch gleichzeitig auch ein längsstabilisierender Effekt bewirkt wird. Die Segmente 11 werden auch durch Fangleinen 10 stabilisiert, an denen der Springer hängt.

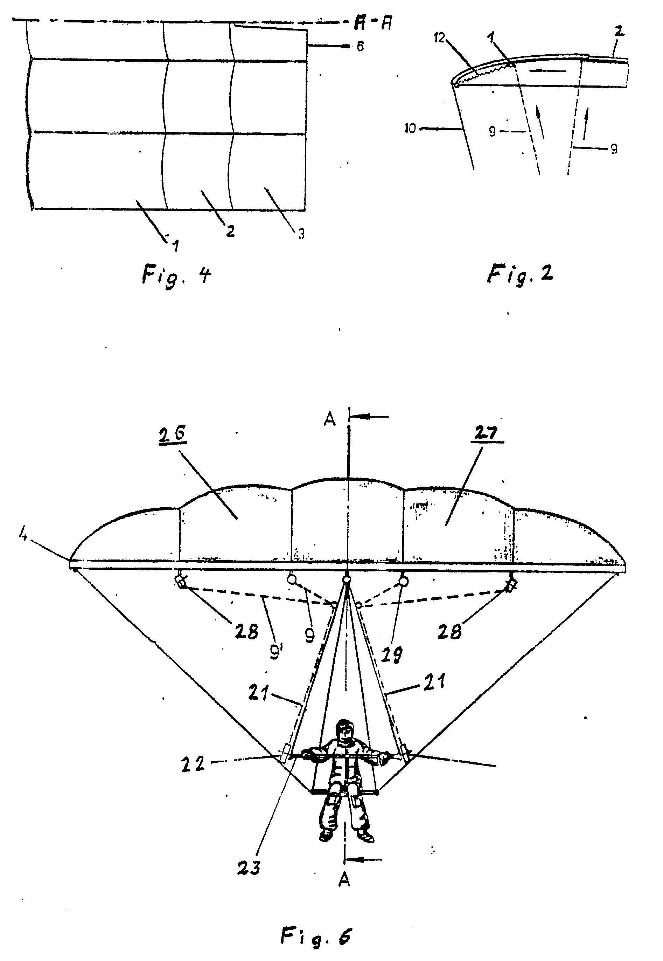

Die in ihrem vorderen Teil beweglichen Profile 2, 3 können über eine endlose Steuerleine 9 insoweit in ihrem Abstand zu den jeweils davor befindlichen Profilen 1, 2, variiert werden, wodurch im Gleitfluggerät Öffnungen, wie in Fig.l dargestellt, entstehen oder, wie in Fig.2 dargestellt, wieder geschlossen sind. Dadurch können Auftrieb und Sinkgeschwindigkeit, aber auch die Vortriebsgeschwindigkeit, gfls auch - bei einseitiger Betätigung der Hälften 26, 27 - die Richtung nach Bedarf verändert werden.

Die Steuerleine 9 kann in ihrem frontalen Anteil, Frontleine 9', vorteilhafterweise teilweise elastisch, Federelement 12, ausgebildet sein und darüberhinaus in einer nach oben sperrenden Klemme 18 oder einer ähnlichen, etwa aus der Segeltechnik bekannten Haltevorrichtung fixiert werden. Der Springer betätigt ausschließlich die Betätigungsleine 19, die als Schlaufe ausgebildet ist. Er zieht damit, ausgehend von geschlossenen Profilen wie in Fig.2 dargestellt, die Steuerleine 9 nach unten bis der Anschlag 13 auf den an der Fangleine 10 befestigten Gleitring 14 auftrifft, womit diese Steuerbewegung, mit welcher die Fronttteile der Profile 2, 3 geöffnet werden, gehemmt wird.

Das Heckteil 6 wird daher erst dann nach unten bewegt, wenn der Springer den frontalen Anteil der Betätigungsleine durch die Hand gleiten läßt bis er den tiefsten Punkt erreicht hat, danach dieselbe weiter nach unten zieht so, daß über den Gleitring 16 und den Anschlag 15 die Heckleine 9" ebenfalls betätigt und damit eine ebenfalls der Steuerung dienende Bewegung des Heckteils 6 des Heckprofils 3 ausgelöst wird. Durch diese Bewegung des Heckteils 6 bremst der Springer den Vortrieb des Gleitfluggerätes, erhöht aber gleichzeitg durch den verstärkten Luftdurchsatz zwischen den nun weit geöffneten Profilen den Auftrieb und vermindert damit die Gefahr des Strömungsabrisses. Wird diese Bewegung nur einseitig, also nur an einer der Hälften 26, 27 durchgeführt, dann wird die Flugrichtung entsprechend geändert.

Erst beim vollen Bremsvorgang, wenn das Heckprofil 3 mit seinem Heckteil 6 voll nach unten ausgeschlagen ist, wird über den weiteren Anschlag 17 und den zugeordneten Gleitring 20 die weitere Steuerleine 7 ebenfalls nach unten gezogen. Infolgedessen werden die Durchtrittsöffnungen zwischen den Profilen 1, 2, 3 geschlossen,der Luftdurchsatz und damit der Auftrieb verringert und somit ein kontrollierer Strömungsabriß erzielt, wie er beim Landevorgang erforderlich ist.

Fig. 4 zeigt die Profilfolge in Aufsicht, wobei nur ein Teil der rechten Hälfte des Gleitfluggerätes dargestellt ist. Das Heckteil 6 des Heckprofils 3 ist zur besseren Steuerbarkeit hier zweigeteilt. Die Fig. 2 zeigt im Teilschnitt die Profile in geschlossenem Zustand bei entlasteter Steuerleine 9. Außerdem ist hier eine Variante dargestellt: die Frontleine 9' der Steuerleine 9 entfällt, dafür ist der elastische Zug, Federelement 12, unmittelbar an der frontalen Kante des Profils 1 fixiert.

Mittels der weiteren Figuren wird nun unter Verwendung der gleichen Bezugszeichen für äquivalente Teile das gleiche System, jedoch als Hängegleiter, in einem Ausführungsbeispiel beschrieben.

Hier sind die Profile 1, 2, 3 auf einen Rahmen 6 gespannt. Der Springer sitzt, wie bei Hängegleitern üblich, im Hängegurtsystem 5. Steuerleinen 9 führen hier zum Steuerbügel 21, der hier also zusammen mit der genannten Steuerleine als "Betätigungsleine", besser: Betätigungsorgan dient; er wird üblicherweise zur Gewichtsverlagerung verwendet. Die Steuerleinen 9 werden durch die Umlenkrollen 28 und/oder die Gleitringe 29 geführt. Die rückwärtigen Teile (Heckteile) der Profile 1, 2 werden durch die weitere Steuerleine 7 verspannt, desgleichen die Frontteile durch die hier elastisch ausgebildeten Züge 24.

Die Steuerleine 9 ist über Gleitringe 29 und Umlenkrollen 28 als Endlosleine auf eine feststellbare Rolle 22 am Steuerbügel 21 so geführt, daß der Springer auch während des Fluges mittels dieser Rolle den Abstand der Profile 1, 2, 3 zueinander variieren kann. Die Führung der Steuerleine 9 durch die Gleitringe 29 im jeweiligen Heckteil der Profile 1, 2, 3 erfolgt dabei so, daß der heckseitige Abstand der Profile zueinander verringert wird und damit ein Düseneffekt auftritt. Der Steuerbügel 21 kann gegenüber den bekannten Geräten dieser Art in der Hochachse drehbar gelagert sein.

Bei elastischer Ausbildung der Heckteile 6 der Profile 3 mit nach vertikal ausgerichteter Vorspannung ist es über den drehbaren Steuerbügel 21 und die Steuerleine 9 möglich, die Heckteile 6 als Höhenruder zu betätigen, ebenso auch das Seitenruder 25.

Das Schließen der Frontteile der Profile 2, 3 wird durch Bewegen der Steuerleine 9 in Richtung des Pfeiles 30 bewirkt.

Von besonderem Vorteil ist es, den Querholm 23 des Steuerbügels 21 drehbar zu lagern und dessen Achse mit der Rolle 22 fest zu verbinden, siehe besonders Fig. 6. Dadurch kann der Springer, ohne umgreifen zu müssen, die Profile öffnen und schließen und gleichzeitig Steuerbewegungen ausführen, wie sie so mit bisherigen Gleitfluggeräten nicht möglich waren.

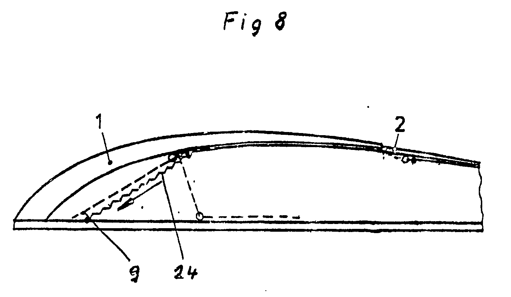

Schließlich wird mittels der Fig. 8, ähnlich wie Fig. 2, ein Teil der geschlossenen Profile eines nach der Erfindung ausgebildeten Hängegeleiters dargestellt.

## Patentansprüche

1. Gleitfluggerät mit variabler Gleitzahl, gebildet aus einzelnen, in der Hauptflugrichtung hintereinander angeordneten und im Sinne eines Vielfachschlitzflügels unmittelbar einander zugeordneten Profilen (1, 2, 3), zwischen welchen zur Änderung der Luftströmungen vom Springer über ein Leinenverbundsystem betätigbare Öffnungen (Flügelschlitze) vorgesehen sind, dadurch gekennzeichnet, daß die im Frontbereich befindlichen Teile der einzelnen Profile (1, 2, 3) mittels einer zum Leinenverbundsystem gehörenden Betätigungsleine (19) im Sinne einer Wölbungsvergrößerung herunterziehbar sind, wobei die Betätigungsleine (19) als Schlaufe ausgebildet ist, deren vorderer Teil (Frontleine 9') zum Herabziehen der Profilfrontteile und deren hinterer Teil (Heckleine 9'') zum Herabziehen der Profilhinterteile und Verschließen der Flügelschlitze vorgesehen ist.

2. Gerät nach Anspruch 1, dadurch gekennzeichnet, daß die Profile (1, 2, 3) fest miteinander durch senkrecht oder auch winkelig zur Profilebene angeordnete Segmente (11) verbunden und diese gfls durch Fangleinen (10) stabilisiert sind.

3. Gerät nach Anspruch 1 bis 2, dadurch gekennzeichnet daß durch Variation der Frontteile der Profile (2, 3) die Abstände zu den jeweils vorangehenden Profilen (1, 2) verändert und so Flügelschlitze variablen Volumens gebildet werden.

4. Gerät nach den Ansprüchen 1 bis 3, dadurch gekennzeichnet, daß die mögliche Variation der Frontteile der Profile (2, 3) und damit der Abstände zu den jeweils vorangehenden Profilen (1, 2) durch eine in einer Klemmvorrichtung (Klemme 18) fixierbare endlose Steuerleine (9) einstellbar ist.

5. Gerät nach Anspruch 4, dadurch gekennzeichnet, daß der frontale Anteil (Frontleine 9') der Steuerleine (9) teilweise elastisch (Federelement 12) ausgebildet ist.

6. Gerät nach den Ansprüchen 4 und 5, dadurch gekennzeichnet, daß die Steuerleine (9) entlang der Unterseite des jeweiligen Profils (1, 2, 3) durch Ösen (8) bzw. Gleitringe (29) so geführt ist, daß mit dem Ziehen der Frontteile der Profile (2, 3) nach unten und damit dem Bilden von Flügelschlitzen gleichzeitig eine Verringerung der Abstände der Heckteile der Profile (1, 2) zu den jeweils folgenden Profilen (2, 3) verbunden ist.

7. Gerät nach einem oder mehreren der vorhergehenden Ansprüche, dadurch gekennzeichnet, daß durch Betätigen der Betätigungsleine (19) über ein Leinenverbundsystem in drei aufeinander folgenden Phasen folgende Variationen erfolgen: Verstellung der Frontteile der Profile (2, 3) zur Bildung von Flüge schlitzen, Absenken der Heckteile (6) der Heckprofile (3), Absenken der Heckteile der vorderen Profile 1, 2 zum Schließen der Flügelschlitze sowie gfls weiteres Absenken der Heckteile (6) der Heckprofile (3).

8. Gerät nach einem oder mehreren der vorhergehenden Ansprüche, dadurch gekennzeichnet, daß bei Ausbildung als Hängegleiter ein in der Hochachse drehbar gelagerter Steuerbügel (21) vorgesehen ist.

9. Gerät nach einem oder mehreren der vorhergehenden Ansprüche, dadurch gekennzeichnet, daß bei Ausbildung als Hängeleiter die Steuerleine (9) über eine am Steuerbügel (21) feststellbare Rolle (22) geführt ist.

10. Gerät nach Anspruch 9, dadurch gekennzeichnet, daß die Rolle (22) mit der Achse des drehbar gelagerten Querholms (23) des Steuerbügels (21) fest verbunden ist.

## Claims

1. A gliding flight apparatus with variable glide factor formed from individual profiles (1, 2, 3) arranged one behind the other in the main flight direction and directly associated one with another in the sense of a multiple slotted wing, between which profiles are provided openings (wing slots) actuatable by the jumper through a rigging system for the purpose of changing the air currents, characterised in that the parts of the individual profiles (1, 2, 3) situated in the front region can be pulled downward by means or an actuating line (19) belonging to the rigging system, in the sense of an enlargement of the curvature, the actuating line (19) being constructed as a loop whose front part (front line 9') is provided for pulling down the profile front parts and whose rear part (tail line 9'') for pulling down the profile rear parts and closing the wing slots.

2. Apparatus according to Claim 1, characterised in that the profiles (1, 2, 3) are firmly joined together by segments (11) arranged vertical to or at an angle to the profile plane, and these segments may be stabilised by shroud lines (10).

3. Apparatus according to Claim 1 to 2, characterised in that the distances to whichever profiles are advancing (1, 2) are changed by variation of the front parts of the profiles (2, 3) and thus wing slots of variable volume are formed.

4. Apparatus according to Claims 1 to 3 characterised in that the possible variation of the front parts of the profiles (2, 3) and thus of the distances to whichever profiles (1, 2) are advancing is adjustable by an endless control line (9) fixable in a clamping device (clamp 18).

5. Apparatus according to Claim 4, characterised in that the frontal portion (front line 9') of the control line (9) is partly elastic (spring element 12) in construction.

6. Apparatus according to Claims 4 and 5, characterised in that the control line (9) is guided along the underside of the relevant profile (1, 2, 3) by eyes (8) or sliding rings (29) in such a way that, when the front parts of the profiles (2, 3) are pulled downward and thus wing slots are formed, the distances from the tail parts of the profiles (1, 2) to whichever profiles (2, 3) are following are simultaneously reduced.

7. Apparatus according to one or more of the preceding claims, characterised in that by actuating the actuating line (19) through a rigging system the following variations take place in three consecutive phases: shifting of the front parts of the profiles (2, 3) for the forming of wing slots, lowering of the tail parts (6) of the tail profiles (3), lowering of the tail parts of the front profiles (1, 2) for closing the wing slots, and possibly also further lowering of the tail parts (6) of the tail profiles (3)

8. Apparatus according to one or more of the preceding claims, characterised in that, in the construction as a hang glider, a control hoop (21) is provided rotatably mounted in the normal axis.

9. Apparatus according to one or more of the preceding claims, characterised in that, in the construction as a hang glider, the control line (9) is guided over a roller (22) fixable on toe control hoop (21).

10. Apparatus accrding to Claim 9, characterised in that the roller (22) is firmly connected with the axis of the rotatably mounted transverse spar (23) of the control hoop (21).

**Revendications**

1. Parachute planant avec coefficient de glissement variable constitué par des profils (1, 2, 3) individuels disposés les uns derrière les autres dans la direction principale du vol et associés directement les uns aux autres dans le sens d'une aile à fentes multiples, des ouvertures (fentes d'aile) étant prévues entre lesdits profils et pouvant être manoeuvrées par le parachutiste par l'intermédiaire d'un système de combinaison de drisses, caractérisé en ce que les éléments des différents profils (1, 2, 3) situés dans la zone frontale peuvent être tirés vers le bas, dans le sens d'une augmentation de la courbure, au moyen d'une drisse de commande (19), la drisse de commande (19) étant conformée en une boucle dont la partie antérieure (drisse frontale 9') est prévue pour tirer les éléments frontaux des profils vers le bas et dont la partie postérieure (drisse arrière 9'') sert à abaisser les éléments postérieurs des profils et à fermer les fentes de l'aile.

2. Parachute selon la revendication 1, caractérisé en ce que les profils (1, 2, 3) sont solidement rattachés les uns aux autres par des segments (11) placés perpendiculairement ou aussi de manière angulaire par rapport au plan des profils et que lesdits segments sont stabilisés, le cas échéant, par des suspentes (10)

3. Parachute selon l'une des revendications 1 et 2, caractérisé en ce que la variation des éléments frontaux des profils (2, 3) permet de modifier les distances par rapport aux profils (1, 2) respectivement précédents et de constituer ainsi des fentes d'aile de volume variable.

4. Parachute selon l'une quelconque des revendications 1 à 3, caractérisé en ce que la variation possible des éléments frontaux des profils (2, 3) et donc des distances par rapport aux profils (1, 2) respectivement précédents peut être réglée par une drisse de commande (9) sans fin pouvant être bloquée dans un dispositif de serrage (mâchoire 18).

5. Parachute selon la revendication 4, caractérisé en ce que la partie frontale (drisse frontale 9') de la drisse de commande (9) est partiellement élastique (élément élastique 12)

6. Parachute selon l'une des revendications 4 et 5, caractérisé en ce que la drisse de commande (9) est guidée, le long de la face inférieure du profil respectif (1, 2, 3), dans des oeillets (8) et respectivement des anneaux de glissement (29) de telle façon que la traction vers le bas des éléments frontaux des profils (2, 3) et, par conséquent, la formation de fentes d'aile, provoque en même temps une réduction des distances des éléments arrières des profils (1, 2) par rapport aux profils (2, 3) respectivement consécutifs.

7. Parachute selon l'une quelconque des revendications 1 à 6, caractérisé en ce que l'actionnement de la drisse de commande (19) provoque, par l'intermédiaire d'un système de combinaison de drisses et en trois phases consécutives, les variations suivantes Déplacement des éléments frontaux des profils (2, 3) pour la formation de fentes d'aile, abaissement des éléments arrières (6) des profils postérieurs (3), abaissement des éléments arrières des profils antérieurs (1, 2) pour la fermeture des fentes d'aile ainsi que, le cas échéant, abaissement supplémentaire des éléments arrière (6) des profils postérieurs (3)

8. Parachute selon l'une quelconque des revendications 1 à 7, caractérisé en ce qu'il comprend, pour la conformation en parachute planant à suspension, un étrier de commande (21) monté de manière tournante dans l'axe vertical.

9. Parachute selon l'une quelconque des revendications 1 à 8, caractérisé en ce que, pour la conformation en parachute planant à suspension, la drisse de commande (9) passe par une poulie (22) pouvant être bloquée sur l'étrier de commande (21)

10. Parachute selon la revendication 9, caractérisé en ce que la poulie (22) est solidarisée avec l'axe du longeron transversal (23) tournant de l'étrier de commande (21).

Schnitt A - A

Fig. 1

0 109 448

Fig. 3

Fig. 4

Fig. 2

Fig. 6

*Fig.5*

Schnitt A-A

0 109 448

Fig. 7

Fig 8